# EUROPÄISCHE PATENTSCHRIFT

(11) **EP 0 610 741 B1**
(45) Veröffentlichungstag und Bekanntmachung des Hinweises auf die Patenterteilung: **05.03.1997**
(21) Anmeldenummer: 94101248.6
(22) Anmeldetag: 28.01.1994
(51) Int. Cl.: C05D 5/00, C01F 5/40, B01J 2/28

(54) **Verfahren zur Granulierung von Kieserit**
Kieserite granulating process
Procédé de granulation de kiesérite

(30) Priorität: 11.02.1993 DE 4303985
(43) Veröffentlichungstag der Anmeldung: 17.08.1994
(73) Patentinhaber: KALI UND SALZ BETEILIGUNGS AKTIENGESELLSCHAFT, D-34119 Kassel (DE)
(72) Erfinder: Knöpfel, Norbert, Dr., 36100 Petersberg (DE); Schrumpf, Frank, Dr., 36037 Fulda (DE); Fleischer, Thomas, Dr., 36103 Flieden (DE); Werthmann, Rainer, Dr., 34128 Kassel (DE); Schad, Robert, 36119 Neuhof (DE)

(56) Entgegenhaltungen:
- DE-B- 1 183 058
- PATENT ABSTRACTS OF JAPAN vol. 011, no. 106 (C-414)3. April 1987 & JP-A-61 256 920 (UBE IND LTD) 14. November 1986

## Beschreibung

Das Mineral Kieserit (MgSO₄ · H₂O) hat sich als Dünger zur Behebung von Magnesiummangel in land- und forstwirtschaftlich genutzten Böden seit vielen Jahren bewährt.

Wasserlöslichkeit des im Kieserit als Sulfat-Monohydrat vorliegenden Magnesiums stellt besonders auch auf Böden mit einem pH-Wert von über 7 einen bedeutenden Vorteil gegenüber oxidischen oder carbonatischen Magnesiumdüngern dar. Kieserit erlangt auf sulfatarmen Böden weitere Bedeutung durch seinen hohen Schwefelgehalt. Die heute übliche Ausbringung von Düngern mittels Kreiselstreuern erfordert, daß die Düngemittel in Form 2 - 5 mm großer Granalien vorliegen. Da diese Granalien auf dem Weg bis zur Ausbringung verschiedener mechanischer Belastung ausgesetzt sind, bedürfen sie einer hohen Festigkeit und Härte.

Prinzipiell stehen zur Granulierung von Kieserit zwei Methoden zur Verfügung: Die Preßgranulierung, bei der der feinkörnige Kieserit zwischen gegenläufig rotierenden Walzen unter hohem Druck verdichtet wird, und die Rollagglomeration, bei der durch Flüssigkeitszugabe bewirkte Adhäsions- und Kapillarkräfte eine Granulatbildung herbeiführen.

Das starre Kristallgitter des Kieserits ermöglicht keine zufriedenstellende Preßgranulierung, wie sie beispielsweise für Kaliumchlorid praktiziert wird. Zwar wurden in der DE-PS 31 48 404 Hilfsmittel für eine Preßgranulierung vorgeschlagen. Die mechanischen Qualitäten des erhaltenen Preßgranulates können jedoch den Marktanforderungen nicht genügen. Für Kieserit ist deshalb die Rollgranulierung zu bevorzugen.

Bei der Rollgranulierung erfolgt die Granalienbildung durch Kapillarkräfte, die die Granulierflüssigkeit, welche im Granulierorgan dem feinkörnigen Kieserit zugesetzt wird, auf die Kieseritpartikel ausübt. Durch eine rollende Bewegung und weitere Benetzung der Primärgranulate - oder Granulatkeime - wachsen diese nach dem Schneeballprinzip schichtenweise zu kugelförmigen Granalien heran. Durch die in einer rotierenden Trommel oder auf einem Granulierteller auf die Granalien einwirkenden Druck- und Scherkräfte werden diese verdichtet. Man erhält auf diese Weise Grünpellets mit einem relativ breiten Kornspektrum, das bei Anwendung eines Granuliertellers durch dessen klassierende Wirkung deutlich eingegrenzt wird.

Die Granulierung von Kieserit gelingt ohne Zusatz von Granulierhilfsstoffen nur mit sehr großen Wassermengen und führt nach der notwendigen Trocknung der Grünpellets zu Granulaten mit nur mittelmäßigen bis schlechten mechanischen Eigenschaften.

Es ist das Ziel verschiedener Patente, durch Zugabe von Granulierhilfsstoffen die zur Agglomeration notwendige Grünfeuchte zu senken und die Endhärte des Granulats zu verbessern.

In der DE-PS 37 07 785 wird vorgeschlagen, 0,1 bis 8 % wasserlösliche Phosphate als Granulierhilfsmittel einzusetzen, um die Granulatausformung zu verbessern. Dazu ist eine Grünfeuchte von 9 bis 13 % notwendig. Da derart feuchte Granalien zunächst sehr weich und schwer zu handhaben sind, müssen die Granalien gemäß der DE-PS 37 07 785 auf Restfeuchten von 1 bis 4 % getrocknet werden.

Der Zusatz von Mischungen aus Mono-, Di- und Polysacchariden als Granulierhilfsmittel gemäß der DE-PS 36 18 058 ermöglicht bei Grünfeuchten um 7 % das Trocknen der Granalien auf Restfeuchten von 1 bis 2 %. Dadurch wird ein hoher Wertstoffgehalt gewährleistet. Da Saccharide die Aushärtung von Kieserit erheblich verlangsamen, müssen die Grünpellets auf diese niedrige Restfeuchte getrocknet werden, um handhabbar und lagerfähig zu sein.

Trotz aller Fortschritte auf dem Gebiet der Kieseritgranulierung, waren die Ergebnisse nicht zufriedenstellend. Vor allem die mangelnde und unterschiedliche Festigkeit der Granalien gab immer wieder zu Reklamationen Anlaß.
Die Aufgabe, nach einem besseren Granulierungsverfahren zu suchen, bestand also weiter.

Überraschend wurde nun gefunden, daß sich die Aushärtung der Kieseritgrünpellets erheblich beschleunigt, wenn dem Kieserit eine geringe Menge Alkalimetallhydroxid zugesetzt wird. Dieses reagiert mit dem Magnesiumsulfat zu Magnesiumhydroxid. Die zu granulierende Kieseritmischung besteht aus Kieserit-Frischgut und aus Rückgut. Die Frischgutzufuhr pro Zeiteinheit in die Granuliervorrichtung entspricht der Gutkornausfuhr. Die Rückgutzufuhr entspricht der pro Zeiteinheit anfallenden Fehlkornmenge. Das Kieserit-Frischgut ist eine Mischung von groberem Kieserit und staubfein gemahlenem Kieserit. Die Alkalilaugemenge zur Gesamtmischung aus Frisch- und Rückgut wird stets auf die Frischgutmenge bezogen. Dadurch wird sichergestellt, daß die gewünschte Alkalilaugemenge im Produkt auch bei betriebsbedingten Schwankungen des Frischgut/Rückgutverhältnisses weder unter- noch überschritten wird.

Die Erfindung ist in den beiligenden Ansprüchen definiert. Bei der weiteren Ausarbeitung des erfindungsgemäßen Granulierverfahrens wurde festgestellt, daß sich bei Einsatz von konzentrierter Bittersalzlösung als Granulierlösung und Zusatz von 0,7 bis 3,0 % Alkalihydroxid in Form konzentrierter Lauge die Grünfeuchte der Granalien auf 4 bis 6 % senken läßt. Gleichzeitig wird die Aushärtung der Grünpellets derart beschleunigt, daß sie nach 10 - 40 min Reifezeit abgesiebt und gelagert werden können. Zur weiteren Beschleunigung der Aushärtung wird nach vollendeter Granulierung die Wärme der Reaktion zwischen Alkalilauge und Magnesiumsulfat durch Kühlen der Grünpellets in einem Wirbelbettkühler oder einer Kühltrommel entzogen, bis das Granulat eine Temperatur unter 30 °C, vorzugsweise sogar unter 20 °C aufweist.

Das erfindungsgemäße Verfahren ermöglicht im Gegensatz zu den bisher beschriebenen Verfahren den vollständigen Verzicht auf Trocknung der Grünpellets.
Da das Granulat keiner gefügeschwächenden Trocknung unterworfen wird, erreichen die Granalien schon nach 3 bis 5 Tagen Reifezeit Härten von 30 N/Korn und Abriebwerte um 1 %. Das Testkorn wird der Fraktion 2,0 - 2,5 mm entnommen. Eine Verschlechterung der Härte wird auch nach 9 Monaten Lagerzeit nicht beobachtet.

Das erfindungsgemäße Verfahren beinhaltet, daß das Granulierwasser in zwei Schritten zugegeben wird:
- zunächst in Form der Alkalihydroxidlösung in Höhe von 1 bis 2 % Wasser, wobei vor der Granulierung zum Ausgangsgut zugemischt wird;
- dann in Form der MgSO₄-Lösung, wobei diese in einer Menge von 3 bis 5 % H₂O auf dem Granulierteller aufgedüst wird.

Die Gesamtwassermenge beträgt 4 bis 7 %, was extrem wenig ist, wenn man mit konventionellen Rollgranulierverfahren vergleicht, wobei sich die Wasserwerte generell, z.T. beträchtlich, über 8 % H₂O bewegen.

Die Konzentration an MgSO₄ in der anzuwendenden Lösung beträgt bevorzugt 20 bis 35 %.

Die Erfindung wird anhand des folgenden Beispiels näher erläutert:
630 Gew.-Teile Kieserit der Körnung
(mit einer Temperatur von 41° C)

| | |
|---|---|
| 6 % | > 0,8 mm |
| 42 % | 0,25 - 0,8 mm |
| 39 % | 0,09 - 0,25 mm |
| 13 % | < 0,09 mm |

werden mit 370 Gew.-Teilen gemahlenem Kieserit der Körnung
- 12 %: > 0,063 mm
- 29 %: 0,0315 - 0,063 mm
- 36 %: 0,010 - 0,0315 mm
- 23 %: < 0,010 mm
und der Temperatur 32 °C, 640 Gew.-Teilen Rückgut (Temp. 20 °C) und 25 Gew.-Teilen Natronlauge der Konzentration 45 %-Gew. (Temperatur 45 °C) gemischt auf einen Granulierteller gegeben.

Unter Zugabe von 65 Gew.-Teilen Magnesiumsulfatlösung (Temperatur 70 °C) der Konzentration 25 %-Gew. MgSO₄ werden auf dem Teller die Grünpellets geformt und anschließend in einer Kühltrommel auf 20 °C abgekühlt. Das gekühlte Granulat wird 20 min auf Reifebändern belassen, langsam weitertransportiert und der Siebung zugeführt.

Das abzusiebende Gutkorn weist in der Fraktion 2,0 - 2,5 mm nach der Reifung eine Berstkraft von 5 - 7 N/Korn auf.

Nach Siebung und Rückführung des Unter- und Überkorns wird das Produkt gelagert. Die Ausbeute beträgt 63 %. Die Granalien erreichen nach 5 Tagen eine Berstfeste von 30 N/Korn (Fraktion 2,0 - 2,5 mm) und einen Abrieb von 1,1 %. Der Gehalt an wasserlöslichem MgO beträgt 25 %.

Die chemische Analyse eines typischen Granulats findet sich in der folgenden Tabelle.

**Tabelle**

| | |
|---|---|
| Mg | 15,2 % |
| K | 1,3 % |
| Na | 1,2 % |
| Ca | 0,4 % |
| Cl | 1,6 % |
| SO₄ | 61,6 % |
| H₂O | 17,5 % |
| Unlösliches | 0,7 % |

Dies entspricht etwa folgender Mineralzusammensetzung:

| | |
|---|---|
| 81,5 % | Kieserit (teilhydratisiert) (MgSO₄ · 1,6 H₂O) |
| 0,8 % | Mg(OH)₂ |
| 4,4 % | Langbeinit (K₂SO₄ · 2 MgSO₄) |
| 2,0 % | Na₂SO₄ |
| 1,4 % | NaCl |
| 1,6 % | KCl |
| 1,4 % | Anhydrit (CaSO₄) |
| 0,7 % | Unlösliches |

In der Formel für den Kieserit (= MgSO₄ · 1,6 H₂O) ist angedeutet, daß es sich nun nicht mehr durchgehend um das Mineral MgSO₄ · H₂O handelt, (wie ursprünglich eingesetzt), sondern daß mit dem Kieserit während des Granulierens und Reifens ein Hydratationsprozeß vor sich gegangen ist, der zusammen mit dem Mg-Hydroxid die hohe Festigkeit des Granulats bewirkt. Wahrscheinlich nimmt auch das Magnesiumhydroxid an der Reaktion in Form der Hydroxid-Sulfatbildung und damit einer weiteren Vernetzung der Teilchen teil.

## Patentansprüche

1. Verfahren zum Granulieren von Kieserit durch Rollen einer befeuchteten Mischung aus Kieserit, bestehend in zunächst trockner Form aus groberem Kieserit der mittleren Korngröße von 0,3 bis 0,5 mm und aus staubfein gemahlenem Kieserit der mittleren Korngröße von 0,02 bis 0,04 mm, wobei der gemahlene Anteil mindestens 20 % beträgt und rückgeführtem Fehlkorn auf einem Granulierteller unter Zusatz von Granulierhilfsmitteln, Aussieben und Ausführen der erhaltenen verkaufsfähigen Kornfraktion und Rückführung des erhaltenen Fehlkorns in den Granulierprozeß, **dadurch gekennzeichnet**, daß dem Aufgabegut, bezogen auf die Frischgutmenge, zuerst eine Menge von 0,7 bis 3,0 % Alkalihydroxid im Form einer wässrigen Lösung zugesetzt und anschließend die gesamte Mischung auf dem Granulierteller mit einer wässrigen Magnesiumsulfatlösung bedüst wird, wobei die Menge MgSO₄ 1 bis 2 %, bezogen auf die Frischgutmenge beträgt, und die ausgeformten Grünpellets vor dem Aussieben auf mindestens 30° C gekühlt und einem Reifeprozeß unterzogen werden.

2. Verfahren nach Anspruch 1, **dadurch gekennzeichnet**, daß als Alkalihydroxidlösung Natriumhydroxidlösung verwendet wird.

3. Verfahren nach einem der Ansprüche 1 bis 2, **dadurch gekennzeichnet**, daß die Alkalihydroxidlösung in einem Mischer der Kieseritmischung vor Aufgabe auf den Granulierteller untergemischt wird.

4. Verfahren nach Anspruch 1, **dadurch gekennzeichnet**, daß die wässrige Magnesiumsulfatlösung eine Konzentration von 20 - 35 % Magnesiumsulfat aufweist.

5. Verfahren nach einem der Ansprüche 1 bis 3, **dadurch gekennzeichnet**, daß die wässrige Alkalihydroxidlösung eine Konzentration von mindestens 20 % Alkalihydroxid aufweist.

6. Verfahren nach einem der Ansprüche 1 bis 5, **dadurch gekennzeichnet**, daß die zugesetzte Teilwassermenge in Form von Alkalihydroxidlösung 1 bis 2 % und die zugesetzte Teilwassermenge in Form von Magnesiumsulfatlösung 3 bis 5 % bezogen auf die Frischgutmenge beträgt.

7. Verfahren nach Anspruch 1, **dadurch gekennzeichnet**, daß die Reifung und Aushärtung auf Reifebändern bei einer Verweildauer von 10 bis 40 min. erfolgt.

## Claims

1. A process for granulating kieserite by rolling a wetted mixture of kieserite, comprising in initially dry form relatively coarse kieserite of an average grain size of 0.3 to 0.5 mm and kieserite which is ground dust-fine of an average grain size of 0.02 to 0.04 mm, wherein the ground proportion is at least 20%, and returned defective grain on a granulating plate with the addition of granulating additives, sieving out and discharging the saleable grain fraction obtained and returning the defective grain obtained into the granulating procedure, characterised in that firstly an amount of 0.7 to 3.0% of alkali hydroxide in the form of an agueous solution is added to the charge material, with respect to the amount of fresh material, and then the entire mixture is sprayed on the granulating plate with an aqueous magnesium sulphate solution, wherein the amount of MgSO₄ is 1 to 2%, with respect to the amount of fresh material, and before the sieving-out operation the shaped green pellets are cooled to at least 30°C and subjected to a maturing procedure.

2. A process according to claim 1 characterised in that sodium hydroxide solution is used as the alkali hydroxide solution.

3. A process according to claims 1 and 2 characterised in that the alkali hydroxide solution is intermixed in a mixer with the kieserite mixture before being delivered on to the granulating plate.

4. A process according to claim 1 characterised in that the aqueous magnesium sulphate solution has a concentration of 20 - 35% of magnesium sulphate.

5. A process according to one of claims 1 to 3 characterised in that the aqueous alkali hydroxide solution has a concentration of at least 20% of alkali hydroxide.

6. A process according to one of claims 1 to 5 characterised in that the added partial amount of water in the form of alkali hydroxide solution is 1 to 2% with respect to the amount of fresh material and the added partial amount of water in the form of magnesium sulphate solution is 3 to 5% with respect to the amount of fresh material.

7. A process according to claim 1 characterised in that the maturing step and the hardening step are effected on maturing belts with a residence time of 10 to 40 minutes.

## Revendications

1. Procédé pour granuler de la kiesérite par roulage d'un mélange humidifié de kiesérite, constitué, sous une forme d'abord sèche, de kiesérite grossière ayant une granulométrie moyenne de 0,3 à 0,5 mm, et d'une kiesérite finement broyée ayant une granulométrie moyenne de 0,02 à 0,04 mm, où la part broyée correspond à un pourcentage d'au moins 20 %, de déclassés recyclés, sur un disque granulateur, avec addition d'auxiliaires de granulation, tamisage et évacuation de la fraction granulométrique commercialisable obtenue, et recyclage des déclassés obtenus dans l'opération de granulation, caractérisé en ce qu'on ajoute à la charge, par rapport à la quantité de matière fraîche, d'abord une quantité de 0,7 à 3,0 % d'un hydroxyde d'un métal alcalin sous forme d'une solution aqueuse, puis on injecte dans la totalité du mélange, sur le disque de granulation, une solution aqueuse de sulfate de magnésium, la quantité de MgSO₄ étant de 1 à 2 % par rapport à la quantité de matière fraîche, et les pastilles à vert obtenues sont, avant tamisage, refroidies à au moins 30°C, et soumises à un processus de maturation.

2. Procédé selon la revendication 1, caractérisé en ce qu'on utilise comme solution d'hydroxyde d'un métal alcalin une solution d'hydroxyde de sodium.

3. Procédé selon l'une des revendications 1 ou 2, caractérisé en ce que la solution d'hydroxyde d'un métal alcalin est, dans un mélangeur, mélangée au mélange de kiesérite avant mise en place sur le disque granulateur.

4. Procédé selon la revendication 1, caractérisé en ce que la solution aqueuse de sulfate de magnésium a une concentration de 20 à 35 % de sulfate de magnésium.

5. Procédé selon l'une des revendications 1 à 3, caractérisé en ce que la solution aqueuse de l'hydroxyde d'un métal alcalin a une concentration d'au moins 20 % de l'hydroxyde d'un métal alcalin.

6. Procédé selon l'une des revendications 1 à 5, caractérisé en ce que la quantité partielle d'eau ajoutée sous forme d'une solution d'un hydroxyde d'un métal alcalin est de 1 à 2 %, et que la quantité partielle d'eau ajoutée sous forme d'une solution de sulfate de magnésium est de 3 à 5 %, par rapport à la quantité de matière fraîche.

7. Procédé selon la revendication 1, caractérisé en ce que la maturation et le durcissement sont effectués sur des bandes de maturation, pour une durée de séjour de 10 à 40 minutes.
